# EUROPÄISCHE PATENTSCHRIFT

(11) **EP 3 221 655 B1**
(45) Veröffentlichungstag und Bekanntmachung des Hinweises auf die Patenterteilung: **11.04.2018**
(21) Anmeldenummer: 16815744.4
(22) Anmeldetag: 01.12.2016
(51) Int. Cl.: F28D 20/00, F28D 1/02, F28D 1/04

(54) **VERFAHREN UND VORRICHTUNG ZUM EINBRINGEN UND ZUR ENTNAHME VON WÄRMEENERGIE IN BZW. AUS EINEM GEWÄSSER**
METHOD AND DEVICE FOR INPUTTING THERMAL ENERGY INTO AND REMOVING THERMAL ENERGY FROM A BODY OF WATER
PROCÉDÉ ET DISPOSITIF D'INTRODUCTION ET D'EXTRACTION D'ÉNERGIE CALORIFIQUE DANS UN PLAN D'EAU OU À PARTIR D'UN PLAN D'EAU.

(30) Priorität: 04.12.2015 DE 102015121177
(43) Veröffentlichungstag der Anmeldung: 27.09.2017
(73) Patentinhaber: Naturspeicher GmbH, 89081 Ulm (DE)
(72) Erfinder: SCHECHNER, Alexander, 89075 Ulm (DE); DEROI, Luis, 73453 Untergröningen (DE)
(74) Vertreter: Bergmeier, Werner
(86) Internationale Anmeldenummer: PCT/EP2016/079481
(87) Internationale Veröffentlichungsnummer: WO 2017/093426

(56) Entgegenhaltungen:
- CN-A- 101 936 622
- CN-Y- 201 014 844
- DE-A1- 2 609 113
- DE-A1- 3 017 183
- DE-A1-102009 037 118

## Beschreibung

Die vorliegende Erfindung betrifft eine Vorrichtung sowie eine die Vorrichtung umfassende Anlage zum Einbringen von Wärmeenergie in ein Gewässer sowie zum Entziehen von Wärmeenergie aus dem Gewässer.

Ferner wird ein Verfahren zum Erwärmen bzw. Kühlen eines Bauwerks mit Hilfe einer entsprechenden Vorrichtung beschrieben.

Aufgrund steigender Energiekosten und auch ökologischer Aspekte wird es immer wichtiger, natürliche Energiequellen, wie beispielsweise Wind oder Sonnenkraft, zu nutzen, um den Einsatz fossiler Brennstoffe zu minimieren. Da derartige Energiequellen die nötige Energie jedoch oftmals nur für gewisse Zeiträume liefern (Solarzellen liefern in der Nacht keinen Strom; Windräder stehen bei Windstille still), wird Energie, die mit Hilfe natürlicher Energiequellen erzeugt wird, in Zeiten eines Energieüberschusses zwischengespeichert, um sie zu einem späteren Zeitpunkt, z.B. nachts, nutzen zu können.

Bewährt haben sich hierfür beispielsweise so genannte Pumpspeicherkraftwerke. Hier wird Wasser, z.B. mit Hilfe von mittels Windrädern erzeugtem Strom, in ein höher gelegenes Speicherbecken gepumpt. Wird Energie benötigt, so kann die potentielle Energie des Wassers beim Ablassen desselben in ein tiefer gelegenes Speicherbecken genutzt werden, um Generatoren anzutreiben und damit elektrischen Strom zu erzeugen.

Auch wurde bereits vorgeschlagen, Wärmeenergie in Wassertanks zwischenzuspeichern, um diese später wieder mit Hilfe eines Wärmetauschers aus dem Wassertank entziehen und nutzen zu können.

Zwar besitzen die bisher bekannten Verfahren zweifelsfrei Vorteile gegenüber der bedenkenlosen Nutzung ausschließlich fossiler Energiequellen. Dennoch ist auch hier Raum für Verbesserungen.

Aus der DE 30 17 183 A1 ist eine Wärmepumpenanlage bekannt. Die Wärmepumpenanlage umfasst einen aus mindestens einem Block bestehenden Wärmetauscher für Oberflächengewässer, der mit dem übrigen Teil der Anlage mittels Rohrleitungen für den Kältemittel- oder Solekreislauf verbunden ist. Der Wärmetauscher ist mit einer Rohrbrücke oder einem Rohrbrückenkopf, auf der oder an dem die starren Rohrleitungen des Kältemittel- oder Solekreislaufes enden, beweglich verbunden ist, so dass der Wärmetauscher mit Hilfe von Hebezeugen im mit der Anlage zusammengebauten Zustand zum Zwecke der Wartung aus dem Wasser hebbar ist, wobei diese Beweglichkeit durch die Elastizität der Verbindungsrohre bzw. durch handelsübliche, flexible Rohrzwischenstücke oder Rohrkupplungen erreicht wird. DE-A-3017183 offenbart eine Vorrichtung gemäß dem Oberbegriff des Anspruchs 1. Aus der CN 101936622 A ist ein Wärmepumpensystem bekannt, das Kälte- und Wärmeenergie aus Seewasser durch Wärmepumpentechnologie entnimmt. Das System besteht im Wesentlichen aus einer Wärmepumpeneinheit, einer Wasserpumpe, einer Wasserversorgungsleitung, einer Wasserrücklaufleitung und einer Wärmeaustauschvorrichtung.

Aus der DE 10 2009 037 118 A1 ist ein Wärmetauscherelement mit einem eliptischen, in horizontaler Richtung gestreckten Hohlkörper bekannt, der an der Unterseite ein doppellagiges, konkav gewölbtes Blech mit einem Zwischenraum aufweist. In diesem Zwischenraum kann das Wärmetauschmedium zirkulieren um einen Wärmeaustausch an der unteren Grenzfläche zu erzielen. Die obere konkav gewölbte Blechfläche ist das Deckblech. Beidseits im engsten Elipsenradius sind Rohrleitungen angeordnet. Diese Leitungen sind die Vor- und Rücklaufleitungen, die das Wärmetauschmedium der Wärmepumpe zu- bzw. ableiten. Die Rohre haben jeweils, in der Draufsicht der Elemente diagonal gegenüberliegend, Anschlüsse an den Zwischenraum des doppellagigen Wärmetauscherbleches durch Muffen oder Schlitze und zwar an der Rohrunterseite zur Zwangsentlüftung des Wärmetauscherzwischenraumes in die Rohre. Durch die Tichelmannsche Schaltung wird ein günstiger Wärmeübertrag erreicht. Eine gezielte Durchströmung des Wärmetauscherzwischenraumes wird durch eingebaute Leitbleche erreicht. Die Stirnflächen der Hohlkörper werden mit dichten Stirnblechen abgeschlossen. Durch diese Stirnbleche werden die Vor- und Rücklaufleitungen druckdicht durchgeführt. Der Hohlkörper kann ausgeschäumt werden.

Aus der CN 201014844 Y ist eine Klimatisierungsvorrichtung bekannt, die zu einer Zentralklimaanlage für Meerwasser gehört. Die Klimatisierungsvorrichtung umfasst eine Wärmepumpeneinheit, einen Wärmetauscher und eine Klimatisierungseinheit, wobei der Wärmetauscher einen Meerwasser-Wärmetauscher aufweist.

Aus der DE 26 09 113 A1 ist eine Anlage zur Klimatisierung von an Gewässern liegenden, ein heißfeuchtes Klima aufweisenden Städten bekannt. Die Anlage umfasst mehrere über das Stadtgebiet verteilte Kühltürme, welche über Wasserzuleitungen und Wasserrückleitungen und Pumpenanlagen mit Kälteanlagen verbunden sind, die ihrerseits über weitere Pumpenanlagen mit dem Gewässer in Verbindung stehen, wobei das zwischen den Kälteanlagen und den Kühltürmen im Kreislauf geführte Wasser in den Kühltürmen aus der Umgebungsluft Wärme aufnimmt, wobei Kondenswasser anfällt, und in den Kälteanlagen die aufgenommene Wärme abgibt.

Aufgabe der vorliegenden Erfindung ist es daher, eine Vorrichtung bzw. Anlage sowie ein Verfahren vorzuschlagen, mit deren Hilfe eine besonders effiziente Nutzung natürlich vorkommender Energie möglich ist.

Die Aufgabe wird gelöst durch eine Vorrichtung, eine Anlage sowie den Verfahren mit den Merkmalen der unabhängigen Patentansprüche.

Die erfindungsgemäße Vorrichtung dient prinzipiell dem Einbringen von Wärme in ein Gewässer sowie zum Entziehen von Wärmeenergie aus dem Gewässer, wobei es sich bei dem Gewässer beispielsweise um einen künstlich angelegten Teich oder See oder ein Pumpspeicherbecken handeln kann, das mit einem oder mehreren Windrädern in Wirkverbindung steht.

Die Vorrichtung besitzt generell einen Grundkörper mit einem innenliegenden ganz oder teilweise abgeschlossenen Hohlraum, wobei der Hohlraum derart bemessen ist, dass die Vorrichtung nach dem Einsetzen in das Gewässer schwimmt. Vorzugsweise umfasst die Vorrichtung Befestigungsstellen, über die sie im Gewässer ortsfest fixierbar ist.

Ferner umfasst die Vorrichtung einen Wasserwärmetauscher, der nach dem Einsetzen der Vorrichtung in das Gewässer zumindest teilweise in das Gewässer eintaucht, so dass die durch den Wärmetauscher fließende Wärmeträgerflüssigkeit über eine oder mehrere Wärmetauscherwandungen mit dem Gewässer in wärmeleitendem Kontakt steht, um einen Austausch von Wärmeenergie zwischen der Wärmeträgerflüssigkeit und dem Wasser des Gewässers zu ermöglichen.

Der Wasserwärmetauscher besitzt einen Zulauf für die Wärmeträgerflüssigkeit, bei der es sich beispielsweise um Glykol oder eine andere bekannte Wärmeträgerflüssigkeit handeln kann, und einen Ablauf für die Wärmeträgerflüssigkeit. Wird die Vorrichtung nun vor ihrem Einsatz über ein Leitungssystem mit einer an Land stehenden Wärmepumpe verbunden, so kann Wärmeträgerflüssigkeit von der Wärmepumpe über das Leitungssystem zu der Vorrichtung strömen. Dort gelangt es über den Zulauf in den Wasserwärmetauscher, durchströmt diesen und fließt schließlich wieder über das Leitungssystem zurück zur Wärmepumpe. Besitzt das Wasser des Gewässers eine Temperatur, die über der Temperatur der Wärmeträgerflüssigkeit liegt, so nimmt die Wärmeträgerflüssigkeit beim Passieren des Wasserwärmetauschers Wärmeenergie vom Gewässer auf und leitet dies weiter zur Wärmepumpe, die wiederum Wärmeenergie aus der Wärmeträgerflüssigkeit entzieht (um beispielsweise ein Gebäude zu heizen).

Je nach Temperatur der Wärmeträgerflüssigkeit und der Wassertemperatur kann es hierbei (insbesondere in den Wintermonaten) dazu kommen, dass das die Vorrichtung umgebende Wasser seinen Aggregatszustand ändert und zu Eis gefriert, wobei dem Wasser hierbei besonders viel Wärmeenergie entzogen werden kann. Das Gewässer wirkt in diesem Fall als "Eisspeicher".

Um das Gewässer nun gleichzeitig oder zeitversetzt mit natürlicher Wärmeenergie zu versorgen und damit das Gewässer wieder zu erwärmen bzw. eventuell gebildetes Eis zu schmelzen, weist die Vorrichtung darüber hinaus einen Luftwärmetauscher auf, mit dessen Hilfe Wärmeenergie aus der Umgebungsluft in das Gewässer einbringbar ist. Der Luftwärmetauscher besitzt hierfür einen Lufteinlass für den Eintritt von Umgebungsluft und einen Luftauslass für den Austritt der zuvor über den Lufteinlass in den Luftwärmetauscher eingetretenen Umgebungsluft, so dass die Umgebungsluft durch den Luftwärmetauscher strömen kann. Um diese Strömung bei Bedarf erzwingen zu können, ist vorgesehen, dass die Vorrichtung zumindest einen Lüfter umfasst, mit dessen Hilfe Umgebungsluft über den Lufteinlass in den Luftwärmetauscher und anschließend durch den Luftwärmetauscher bewegbar ist. Bei dem Lüfter handelt es sich um einen Ventilator oder ein Gebläse. Ferner besitzt der Luftwärmetauscher einen Einlass für aus dem Gewässer stammendes Wasser und einen Auslass für das über den Einlass zugeführte Wasser, so dass Wasser aus dem Gewässer durch den Luftwärmetauscher strömen und diesen anschließend wieder verlassen kann.

Während also der oben genannte Wasserwärmetauscher dazu dient, dem Gewässer Wärmeenergie zu entziehen und die Wärmeenergie an eine an Land platzierte Wärmepumpe zu leiten, besteht die Aufgabe des Luftwärmetauschers darin, Wärmeenergie der die Vorrichtung umgebenden Umgebungsluft zu entziehen und diese in das Wasser des Gewässers einzubringen. Hierfür weist der Luftwärmetauscher eine oder mehrere Trennwände auf, über die das den Luftwärmetauscher passierende Wasser von der ebenfalls den Luftwärmetauscher passierenden Umgebungsluft räumlich getrennt ist, wobei über die Trennwand bzw. die Trennwände die Übertragung der Wärmeenergie von der Umgebungsluft auf das Wasser erfolgt.

Während der obige Einsatz in Zeiten sinnvoll ist, in denen das mit der Vorrichtung verbundene Bauwerk (Schule, Turnhalle, Wohnhaus, Industriegebäude, etc.) geheizt werden soll, kann die Vorrichtung auch genutzt werden, um ein Bauwerk, vorzugsweise im Sommer, zu kühlen. In diesem Fall ist es möglich, den Lüfter dann zu betreiben, wenn die Temperatur der Umgebungsluft geringer ist als die Temperatur des die Vorrichtung umgebenden Wassers des Gewässers. Hierdurch wird Wärmeenergie vom Wasser auf die Umgebungsluft übertragen, das Gewässer kühlt sich somit ab. Wird nun, vorzugsweise während des Tages, eine von dem Bauwerk gelieferte Wärmeträgerflüssigkeit, deren Temperatur höher ist als die Temperatur des Gewässers, durch den Wasserwärmetauscher gepumpt, so wird Wärmeenergie von der Wärmeträgerflüssigkeit an das Gewässer abgegeben. Die abgekühlte Wärmeträgerflüssigkeit kann schließlich zurück zum Bauwerk gepumpt werden und dort einem Kühlkreislauf desselben zugeführt werden.

Von Vorteil ist es, wenn die Vorrichtung einen den Hohlraum bildenden Grundkörper aufweist. Die Vorrichtung ist prinzipiell als Ponton ausgebildet und weist vorzugsweise einen Stromanschluss für die Stromversorgung des Ventilators und mit dem Zulauf und dem Ablauf Anschlussstellen für den Anschluss eines Leitungssystems auf, über das der Wasserwärmetauscher mit einer Wärmeträgerflüssigkeit beschickbar ist. Vorzugsweise besteht der Grundkörper vollständig oder zumindest großteils aus Beton, um eine kostengünstige, stabile und langlebige Konstruktion zu ermöglichen. Innerhalb des Grundkörpers, insbesondere innerhalb des genannten Hohlraums, verlaufen vorzugsweise die insbesondere rohrförmig ausgebildeten Wärmetauscherabschnitte des Luftwärmetauschers, wobei die genannten Wärmetauscherabschnitte beim Betrieb der Vorrichtung von aus dem Gewässer stammendem Wasser durchströmt werden. Hierfür weist entweder die Vorrichtung selbst eine Pumpe auf. Alternativ kann die Vorrichtung auch über den genannten Einlass mit einer entsprechenden Leitung verbunden werden, über die dem Wasserwärmetauscher Wasser mit Hilfe einer externen Pumpe zugeführt werden kann.

Vorteilhaft ist es, wenn der Wasserwärmetauscher beim bestimmungsgemäßen Gebrauch der Vorrichtung unterhalb des Grundkörpers der Vorrichtung in das Gewässer eintaucht. Die eintauchenden Abschnitte des Wasserwärmetauschers (bei denen es sich selbstverständlich um Abschnitte handeln sollte, die von der Wärmeträgerflüssigkeit durchströmbar sind) kommen in diesem Fall mit dem unterhalb der Vorrichtung vorhandenem Wasser direkt in Kontakt, wobei die Übertragung der Wärmeenergie zwischen dem Wasser und der Wärmeträgerflüssigkeit über entsprechende Wandungen der eintauchenden Abschnitte des Wasserwärmetauschers erfolgt. Da sich die eintauchenden Abschnitt vorzugsweise ausschließlich unterhalb der Vorrichtung bzw. deren Grundkörper befinden, ist eine Beschädigung durch vorbeifahrende Boote/Schiffe nahezu ausgeschlossen.

Besondere Vorteile bringt es mit sich, wenn der Wasserwärmetauscher ein oder mehrere von der Wärmeträgerflüssigkeit durchströmbare Rohrabschnitte umfasst, die beim bestimmungsgemäßen Gebrauch der Vorrichtung zumindest abschnittsweise in das Gewässer eintauchen und damit die oben genannten Abschnitte bilden. Vorzugsweise sind die Rohrabschnitte mäanderförmig, spiralförmig oder schlangenlinienförmig ausgebildet, um eine möglichst große Wärmetauscherfläche auf möglichst kleinem Raum bereitzustellen. Die Rohrabschnitte können durch mehrere Rohre gebildet sein oder gemeinsam ein von der Wärmeträgerflüssigkeit durchströmtes Rohr bilden. In jedem Fall sind die Rohrabschnitt mit dem Zulauf und dem Ablauf des Wasserwärmetauschers verbunden, so dass die Wärmeträgerflüssigkeit in die Rohrabschnitte strömen und diese wieder verlassen kann.

Vorteilhaft ist es, wenn die Vorrichtung eine in das Gewässer eingetauchte Schutzwandung umfasst, die das oder die in das Gewässer eintauchenden Wärmetauscherelement(e) seitlich abschirmen. Die Schutzwandung kann sich schürzenartig vom Grundkörper nach unten ins Gewässer erstrecken und verhindert, dass Treibgut seitlich gegen die ins Wasser ragenden Abschnitte des Wasserwärmetauschers stoßen und diese beschädigen. Die Schutzwandung liegt vorzugsweise als separates Bauteil vor, das mit dem Grundkörper verbunden ist, diesen beispielsweise seitlich teilweise oder vollständig (als Rammschutz) umgibt.

Besondere Vorteile bringt es mit sich, wenn die Vorrichtung Abschnitte aufweist, die beim bestimmungsgemäßen Gebrauch der Vorrichtung aus dem Gewässer ragen. Die Vorrichtung ist also insbesondere derart ausgebildet, dass sich ein Teil der Vorrichtung über und ein Teil der Vorrichtung unterhalb des Wasserspiegels des Gewässers befindet. Insbesondere ist es von Vorteil, wenn der Lüfter (von denen generell auch mehrere vorhanden sein können) im Bereich einer der aus dem Gewässer ragenden Abschnitte angeordnet ist, um eine besonders einfache Wartung desselben zu ermöglichen. Alternativ kann der Lüfter selbstverständlich auch innerhalb der Vorrichtung platziert sein, wobei er in diesem Fall schlechter zugänglich ist.

Ebenso bringt es Vorteile mit sich, wenn der Lüfter im Bereich des Lufteinlasses oder des Luftauslasses angeordnet ist. Der Lüfter ist insbesondere beim Betrieb der Vorrichtung von oben sichtbar und z.B. mit einem Trittgitter abgedeckt. Ferner sollte der Lüfter einen Anschluss für eine elektrische Stromversorgung, insbesondere für ein Stromkabel, aufweisen, um ihn mit einer externen, vorzugsweise an Land angeordneten, Stromquelle verbinden zu können.

Besondere Vorteile bringt es mit sich, wenn die Vorrichtung Abschnitte aufweist, die beim bestimmungsgemäßen Gebrauch der Vorrichtung aus dem Gewässer ragen und einen Oberflächenabschnitt des Gewässers zumindest abschnittsweise seitlich begrenzen. Hierdurch wird ein mehr oder weniger stark zur Seite hin abgeschlossenes Wasservolumen begrenzt. Das in diesem Bereich vorhandene Wasser kann bei Sonneneinstrahlung besonders stark erwärmt werden und kann seine Wärmeenergie schließlich an die darunter liegende Vorrichtung und insbesondere an den Luftwärmetauscher abgeben, so dass das durch den Luftwärmetauscher strömende Wasser zusätzlich erwärmt werden kann.

In diesem Zusammenhang ist es von besonderem Vorteil, wenn sich zwischen den genannten Abschnitten ein beim bestimmungsgemäßen Gebrauch der Vorrichtung unterhalb der Wasseroberfläche des Gewässers liegender und von oben zumindest teilweise sichtbarer Deckenabschnitt der Vorrichtung erstreckt. Der Deckenabschnitt kann insbesondere den innenliegenden Hohlraum, der wiederum den Luftwärmetauscher ganz oder teilweise umgibt, nach oben hin begrenzen. Der oberhalb des Deckenabschnitts angeordnete Bereich des Hohlraums, der von einem gewissen Wasservolumen überdeckt ist, kann somit durch das Wasser erwärmt werden. Wird nun Umgebungsluft über den Lufteinlass und den Luftauslass durch den Hohlraum transportiert, so wird diese zusätzlich durch den erwärmten Deckenabschnitt erwärmt, so dass besonders viel Wärmeenergie in das Wasser des Gewässers eingetragen werden kann.

Vorteile bringt es zudem mit sich, wenn sich der Auslass des Luftwärmetauschers im Bereich des Deckenabschnitts erstreckt, so dass über den Auslass aus dem Luftwärmetauscher austretendes Wasser über den Deckenabschnitt zurück in das Gewässer strömen kann. Insbesondere sollte sich der Deckenabschnitt bzw. ein den Auslass desselben umgebender Abschnitt desselben im bestimmungsgemäßen Gebrauch der Vorrichtung (d.h. nach dem Einsetzen in ein Gewässer) oberhalb der Wasseroberfläche befinden. In jedem Fall hat eine Platzierung des Auslasses im Bereich des prinzipiell von oben sichtbaren Deckenabschnitts den Vorteil, dass das austretende Wasser nach dem Verlassen des Luftwärmetauschers an der Oberfläche der Vorrichtung zusätzlich durch Sonnenenergie erwärmt werden kann. Der Eintrag von natürlicher Wärmeenergie ist in diesem Fall maximal.

Besondere Vorteile bringt es damit mit sich, wenn der Deckenabschnitt gemeinsam mit den aus dem Gewässer ragenden Abschnitten ein nach unten und zumindest abschnittsweise auch zur Seite hin begrenztes Becken bildet. Vorzugsweise ist das Becken zu allen Seiten hin durch entsprechend aus dem Gewässer ragende Abschnitte begrenzt und nach oben hin offen. Das sich in dem Becken befindliche Wasser, das über den Auslas des Luftwärmetauschers in das Becken strömen kann, kann in diesem Fall intensiv der Sonneneinstrahlung ausgesetzt und damit zusätzlich erwärmt werden (der genannte Auslass befindet sich vorzugsweise im Bereich des Deckenabschnitts oder im Bereich von nach innen gerichteten Seitenwänden der aus dem Gewässer ragenden Abschnitte der Vorrichtung).

Vorteilhaft ist es, wenn sich der genannte Wasserwärmetauscher, vorzugsweise dessen von der Wärmeträgerflüssigkeit durchströmbare Rohrabschnitte, in den Deckenabschnitt und/oder das Becken erstreckt, so dass Wärmeenergie zwischen der Wärmeträgerflüssigkeit und dem sich in dem Becken befindlichen Wasser übertragbar ist. Wird nun Wärmeträgerflüssigkeit durch den Wasserwärmetauscher gepumpt, dessen Temperatur unter 0°C liegt, so kommt es nach der rasch erfolgenden Abkühlung des sich in dem Becken befindlichen Wassers zum Gefrieren desselben, so dass in relativ kurzer Zeit relativ viel Wärmeenergie auf die Wärmeträgerflüssigkeit übertragen werden kann. Auf diese Weise können dem mit der Vorrichtung verbundenen Bauwerk schnell größere Wärmemengen zur Verfügung gestellt werden, wobei dies zu bestimmten Tageszeiten von besonderem Vorteil ist (z.B. morgens zur schnellen Erwärmung des Bauwerks).

Zusätzlich oder alternativ kann auch ein zweiter Wasserwärmetauscher vorhanden sein, der ebenfalls einen Zulauf für eine Wärmeträgerflüssigkeit und einen Ablauf für die Wärmeträgerflüssigkeit aufweist (wobei der Zu- und Ablauf mit dem ersten Wasserwärmetauscher oder einem separaten Leitungssystem verbunden werden bzw. sein kann). Beispielsweise wäre es denkbar, dass sich der erste Wasserwärmetauscher bzw. dessen Rohrabschnitte ausschließlich in das unterhalb des Grundkörpers vorhandene Wasser des Gewässers erstrecken, während sich der zweite Wasserwärmetauscher bzw. dessen von einer Wärmeträgerflüssigkeit durchströmbare Rohrabschnitte ausschließlich in das Becken und/oder den Deckenabschnitt der Vorrichtung und/oder die aus dem Wasser ragenden Abschnitte derselben erstrecken.

Die erfindungsgemäße Anlage umfasst schließlich eine in einem Gewässer schwimmende Vorrichtung gemäß bisheriger oder nachfolgender Beschreibung, wobei die einzelnen Merkmale einzeln oder in beliebiger Kombination verwirklicht sein können (sofern die Merkmale von Anspruch 1 realisiert sind). Ferner umfasst die Anlage eine außerhalb des Gewässers, d.h. an Land, angeordnete Wärmepumpe, die mit einem Leitungssystem (umfassend vorzugsweise eine Hin- und eine Rückleitung) mit der Vorrichtung verbunden ist, wobei die Wärmepumpe beispielsweise in einem Bauwerk (Gebäude o.ä.) platziert sein kann. Die Wärmepumpe dient dem Entzug von Wärmeenergie aus der über das Leitungssystem von der Vorrichtung zurückströmenden Wärmeträgerflüssigkeit, um hierdurch das Bauwerk zu erwärmen. Insbesondere sind die Wärmepumpe und die Vorrichtung über das Leitungssystem als Kreislauf verbunden, so dass die Wärmeträgerflüssigkeit zwischen der Wärmepumpe und der Vorrichtung zirkulieren kann.

Besondere Vorteile bringt es mit sich, wenn die Anlage mehrere Vorrichtungen gemäß der bisherigen oder nachfolgenden Beschreibung umfasst. Die einzelnen Vorrichtungen können entweder unabhängig voneinander in dem Gewässer platziert sein und jeweils über separate oder dasselbe Leitungsnetz mit einer oder mehreren Wärmepumpen verbunden sein. Vorzugsweise sind jedoch mehrere Vorrichtungen miteinander zu einer schwimmenden Einheit verbunden. Insbesondere sollten in diesem Fall auch die jeweiligen Luftwärmetauscher und/oder Wasserwärmetauscher miteinander gekoppelt sein, so dass Umgebungsluft und/oder Wärmeträgerflüssigkeit und/oder Wasser aus dem Gewässer in Parallel- oder Reihenschaltung durch mehrere Vorrichtungen strömen kann.

Das bisher bereits teilweise beschriebene Verfahren zum Erwärmen eines Bauwerks mit Hilfe einer Vorrichtung gemäß bisheriger bzw. nachfolgender Beschreibung umfasst also die folgenden Schritte:
Zunächst wird die Vorrichtung in ein zuvor ausgewähltes Gewässer, beispielsweise einen (Pump-)Speichersee, verbracht und dort bei Bedarf am Gewässergrund fixiert. Anschließend erfolgt das Verbinden der Vorrichtung mit einer sich an Land befindlichen Wärmepumpe, so dass man im Ergebnis die oben beschriebene Anlage erhält.

Um nun Wärmeenergie von der die Vorrichtung umgebenden Umgebungsluft in das Wasser des Gewässers einzubringen und diese damit zwischenzuspeichern, wird der genannte Lüfter in Betrieb genommen, so dass Umgebungsluft durch den Luftwärmetauscher bewegt wird. Vorzgusweise gleichzeitig oder zeitversetzt wird eine Pumpe aktiviert (die nicht Teil der Vorrichtung sein muss), um Wasser aus dem Gewässer abzupumpen und dem Luftwärmetauscher zuzuführen.

Dadurch, dass der vom Wasser durchströmte Bereich und der von der Umgebungsluft durchströmte Bereich des Luftwärmetauschers lediglich durch eine Trennwand voneinander getrennt sind, wird Wärmeenergie von der Umgebungsluft auf das Wasser übertragen (vorausgesetzt natürlich, dass die Temperatur der Umgebungsluft höher ist als die Temperatur des den Luftwärmetauscher passierenden Wassers).

Gleichzeitig oder vorzugsweise zumindest teilweise zeitversetzt (z.B. nachts) wird schließlich auch die Wärmeträgerflüssigkeit durch den Wasserwärmetauscher gepumpt und nimmt hierbei Wärmeenergie von dem Wasser des Gewässers auf, das schließlich von der Wärmepumpe an einen Heizkreislauf des zu erwärmenden Bauwerks abgegeben werden kann. Die Wärmeträgerflüssigkeit wird hierbei von der Wärmepumpe durch den Wasserwärmetauscher und zurück zur Wärmepumpe gepumpt, wobei im Bereich der Vorrichtung Wärmeenergie von dem aus dem Gewässer stammenden Wasser auf die Wärmeträgerflüssigkeit und anschließend mit Hilfe der Wärmepumpe von der Wärmeträgerflüssigkeit auf einen Heizkreislauf des Bauwerks übertragen wird, um dieses zu erwärmen.

Vorteile bringt es mit sich, wenn der Betrieb des Lüfters, das Bewegen von aus dem Gewässer stammendem Wasser durch den Luftwärmetauscher und/oder das Bewegen der Wärmeträgerflüssigkeit durch den Wasserwärmetauscher in Abhängigkeit des Wärmebedarfs des Bauwerks und/oder der Temperatur der Umgebungsluft und/oder der Temperatur des Gewässers erfolgt. Insbesondere der Lüfter kann hierbei mit Hilfe einer Steuer- und/oder Regeleinheit gesteuert und/oder geregelt werden. Beispielsweise wäre es sinnvoll, den Lüfter nur dann zu betreiben, wenn die Temperatur der Umgebungsluft höher ist als die Temperatur des die Vorrichtung umgebenden Wassers, falls dem Gewässer Wärmeenergie aus der Umgebungsluft zugeführt werden soll.

Alternativ kann die Vorrichtung auch verwendet werden, um ein Bauwerk zu kühlen, d.h. Wärmeenergie vom Bauwerk abzuführen und in das Gewässer einzubringen. Das diesbezügliche Verfahren umfasst folgende Schritte:
Zunächst muss auch in diesem Fall die Vorrichtung (mit den bisherigen oder nachfolgend beschriebenen Merkmalen) in ein Gewässer eingebracht werden (sofern dies nicht bereits geschehen ist, da die Vorrichtung bereits für das zuvor beschriebene Verfahren benutzt wurde). Ebenso muss die Vorrichtung mit einem sich an Land befindlichen Kühlkreislaufs des zu kühlenden Bauwerks verbunden werden (wenn nicht bereits im Rahmen des zuvor beschriebenen Verfahrens geschehen, wobei der Kühlkreislauf mit der genannten Wärmepumpe verbunden sein kann).

Um nun ein Abkühlen des Gewässers zu bewirken, wird der Lüfter betrieben, so dass Umgebungsluft durch den Luftwärmetauscher bewegt wird. Der Lüfter sollte jedoch in diesem Fall nur betrieben werden, wenn die Temperatur der Umgebungsluft geringer ist als die Temperatur des die Vorrichtung umgebenden Wassers des Gewässers, da nur in diesem Fall Wärmeenergie aus dem Wasser auf die Umgebungsluft übertragen werden kann. Der Lüfter sollte daher vorzugsweise nachts betrieben werden.

Gleichzeitig sollte Wasser durch den Luftwärmetauscher gepumpt werden, um die gewünschte Übertragung von Wärmeenergie vom Wasser auf die Umgebungsluft zu ermöglichen. Das Gewässer kühlt sich auf diese Weise ab. Wird nun eine Wärmeträgerflüssigkeit durch den Wasserwärmetauscher gepumpt, dessen Temperatur höher ist als die Temperatur des die Vorrichtung umgebenden Wassers, so kann die Wärmeträgerflüssigkeit die zuvor im Bauwerk aufgenommene Wärmeenergie über den Wasserwärmetauscher an das Gewässer abgeben und kühlt sich somit ab. Die abgekühlte Wärmeträgerflüssigkeit wird nach Passieren des Wasserwärmetauschers schließlich über das Leitungssystem zurück zu dem Gebäude gepumpt und kann dieses über dessen Kühlkreislauf abkühlen.

Vorteilhaft ist es auch in diesem Zusammenhang, wenn der Betrieb des Lüfters, das Bewegen von aus dem Gewässer stammendem Wasser durch den Luftwärmetauscher und/oder das Bewegen der Wärmeträgerflüssigkeit durch den Wasserwärmetauscher in Abhängigkeit des Kältebedarfs des Bauwerks und/oder der Temperatur der Umgebungsluft und/oder der Temperatur des Gewässers erfolgt.

Ferner können die genannten Verfahren selbstverständlich auch kombiniert werden, wobei das zuerst genannte Verfahren in Zeiten ausgeführt werden sollte, in denen das Bauwerk erwärmt werden soll (beispielsweise in den Wintermonaten), während das an zweiter Stelle beschriebene Verfahren dann realisiert werden sollte, wenn das Gebäude abgekühlt werden soll (vorzugsweise also in den Sommermonaten).

Weitere Vorteile der Erfindung sind in den nachfolgenden Ausführungsbeispielen beschrieben. Es zeigen, jeweils schematisch:
- **Figur 1**: eine Darstellung einer erfindungsgemäßen Anlage,
- **Figur 2**: eine perspektivische Ansicht einer ersten Ausführungsform einer erfindungsgemäßen Vorrichtung,

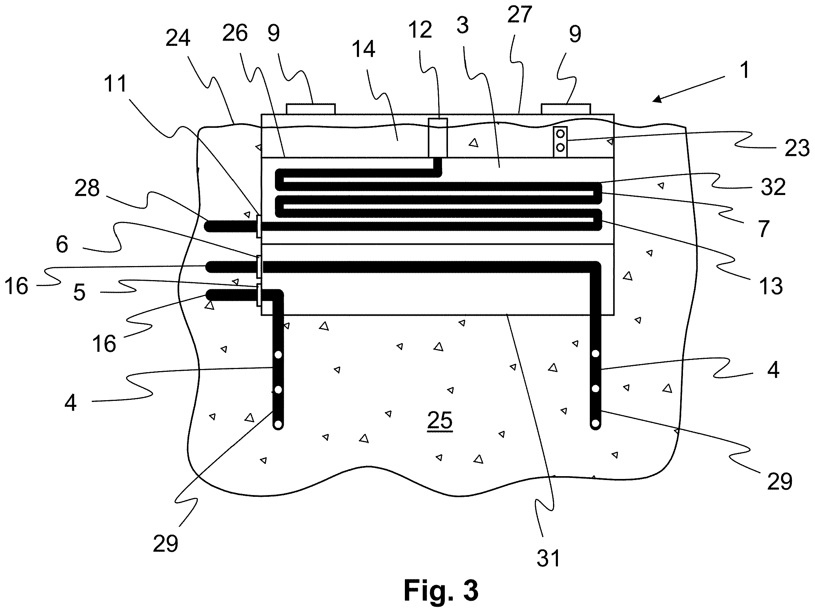

- **Figur 3**: eine Schnittdarstellung der in Figur 2 gezeigten Vorrichtung entlang der gestrichelten Linie in Figur 2 und mit Blick von rechts unten nach links oben (bezogen auf Figur 2),
- **Figur 4**: eine perspektivische Ansicht einer alternativen Ausführungsform einer erfindungsgemäßen Vorrichtung, und
- **Figur 5**: einen Querschnitt der in Figur 4 gezeigten Vorrichtung entlang einer durch die links und rechts gezeigten Luftauslässe und bezogen auf die Ausrichtung der Vorrichtung vertikal verlaufenden Ebene.

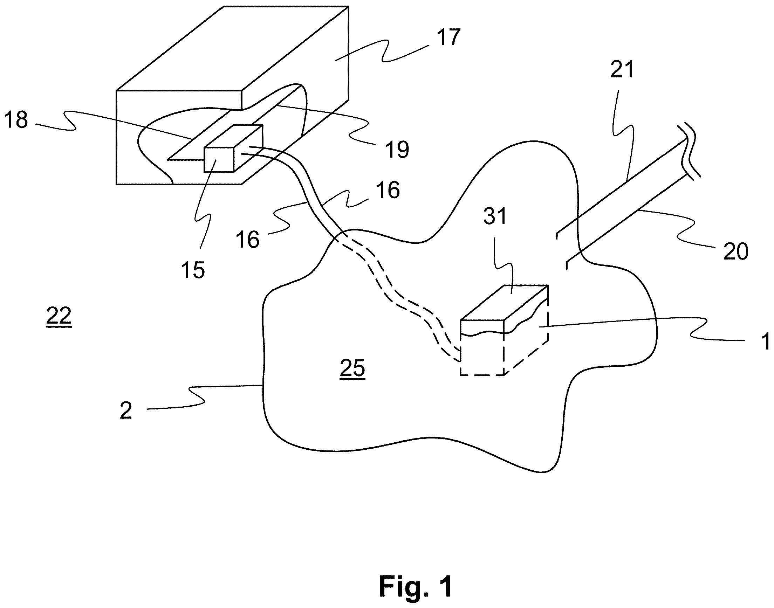

Figur 1 zeigt eine schematische Ansicht einer erfindungsgemäßen Anlage, die dem Einbringen von Wärmeenergie in bzw. die Entnahme von Wärmeenergie aus einem Gewässer 2 dient.

Bei dem Gewässer 2 handelt es sich prinzipiell um ein stehendes, vorzugsweise künstlich angelegtes, Gewässer 2, wie beispielsweise ein Speichersee, der über eine Zuleitung 20 und eine Ableitung 21 mit einem oder mehreren Windkrafttürmen in Verbindung stehen kann, mit deren Hilfe Wasser 25 in das Gewässer 2 hinein oder aus diesem heraus gepumpt werden kann, so dass das Gewässer 2 als Pumpspeichersee dienen kann.

Die erfindungsgemäß zum Einsatz kommende Vorrichtung 1 ist prinzipiell schwimmend ausgebildet, so dass sie sich, wie in Figur 1 gezeigt, nur teilweise unter Wasser 25 befindet (der Wasserspiegel ist mit Bezugszeichen 24 kenntlich gemacht).

Ferner ist die Vorrichtung 1 mit einem Leitungssystem 16 (das vorzugsweise wenigstens zwei Rohre umfasst) verbunden, das wiederum mit einer Wärmepumpe 15 eines sich am Festland 22 befindlichen Bauwerks 17, beispielsweise einem Büro- oder Wohngebäude, verbunden ist. Die Wärmepumpe 15 kann wiederum mit einem Heizkreislauf 18 und/oder einem Kühlkreislauf 19 in Verbindung stehen, über das das Bauwerk 17 schließlich mit Wärmeenergie versorgt oder aber gekühlt werden kann.

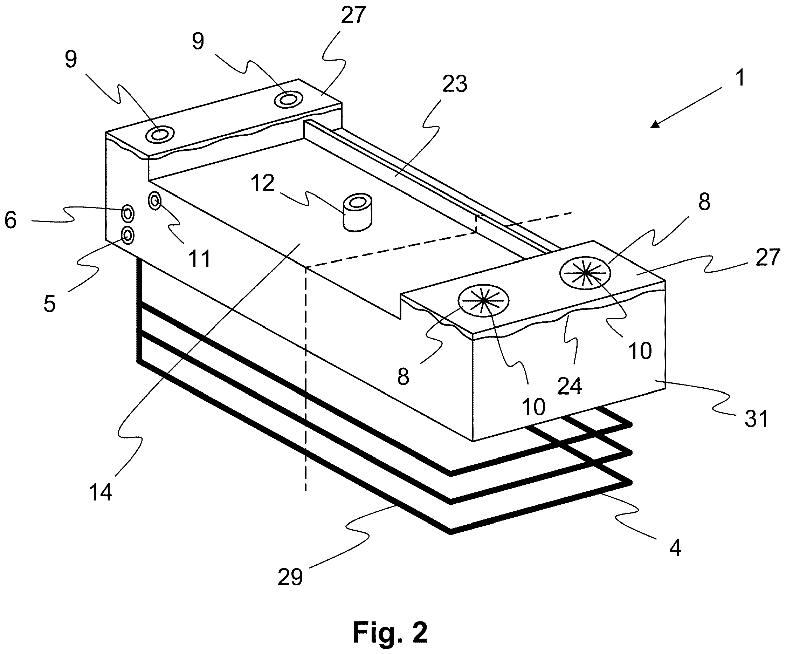

Die Vorrichtung 1 selbst wird nun mit Blick auf die Figuren 2 (Perspektive) und 3 (Schnitt entlang der in Figur 2 gestrichelt dargestellten Linie) näher erläutert:
Prinzipiell besitzt die Vorrichtung 1 einen Grundkörper 31, der vorzugsweise ganz oder teilweise aus Beton gefertigt ist und einen Hohlraum 3 begrenzt, um der Vorrichtung 1 den nötigen Auftrieb im Wasser 25 des Gewässers 2 zu verleihen.

Innerhalb des Hohlraums 3 erstreckt sich ein Luftwärmetauscher 7, der vorzugsweise ein oder mehrere Wärmetauscherrohre 32 umfasst, durch die Wasser 25 des Gewässers 2 fließen kann. Hierfür besitzt der Luftwärmetauscher 7 einen Einlass 11, der mit einer nur unvollständig dargestellten Leitung 28 verbunden ist, die wiederum mit einer Pumpe in Verbindung steht, mit deren Hilfe Wasser 25 aus dem Gewässer 2 in den Wasserwärmetauscher 4 gepumpt werden kann. Das Wasser 25 durchströmt die Wärmetauscherrohre 32 und verlässt den Wasserwärmetauscher 4 schließlich über einen Auslass 12. Der Auslass 12 befindet sich vorzugsweise im Bereich eines nach oben weisenden und vorzugsweise unterhalb des Wasserspiegels 24 verlaufenden Deckenabschnitts 26 der Vorrichtung 1, so dass das austretende Wasser 25 zusätzlich mit Hilfe von Sonnenstrahlung erwärmt werden kann.

Der Hauptwärmeeintrag in das Gewässer 2 erfolgt jedoch über den Luftwärmetauscher 7, dessen Lüfter 10 beim Betrieb der Vorrichtung 1 Umgebungsluft über einen Lufteinlass 8 ansaugt und in den Hohlraum 3 befördert. Dort kommt sie mit der als Trennwand 13 wirkenden Außenwand der Wärmetauscherrohre 32 in Kontakt, so dass Wärmeenergie von der Umgebungsluft auf das durch die Wärmetauscherrohre 32 fließende Wasser 25 übertragen werden kann. Das Gewässer 2 wird hierdurch erwärmt (hinsichtlich der zweiten Verwendungsmöglichkeit der Vorrichtung 1, bei der das Gewässer 2 durch Abgabe von Wärmenergie an die Umgebungsluft abgekühlt wird, wird auf die obige Beschreibung verwiesen).

Schließlich verlässt die abgekühlte Umgebungsluft die Vorrichtung 1 über einen Luftauslass 9, wobei sich der Lufteinlass 8 und der Luftauslass 9 im Bereich eines aus dem Wasser 25 ragenden Abschnitts 27 der Vorrichtung 1 befinden sollten.

Während der Luftwärmetauscher 7 im beschriebenen Fall dazu dient, Wärmeenergie aus der Umgebung in das Gewässer 2 einzubringen, dient der ebenfalls dargestellte Wasserwärmetauscher 4 dazu, dem Gewässer 2 Wärmeenergie zu entziehen, um diese an das Gebäude weiterzuleiten (im umgekehrten, an dieser Stelle nicht explizit beschriebenen Anwendungsfall dient der Luftwärmetauscher 7 zum Abkühlen des Gewässers 2 und der Wasserwärmetauscher 4 zum Einbringen von Wärmeenergie in das Gewässer 2).

Der Wasserwärmetauscher 4 umfasst einen oder mehrere Rohrabschnitte 29, die ganz oder teilweise in das Wasser 25 des Gewässers 2 eintauchen. Der Wasserwärmetauscher 4 besitzt zudem einen Zulauf 5, über den eine Wärmeträgerflüssigkeit (z.B. Glykol) von der Wärmepumpe 15 über das Leitungssystem 16 in den Wasserwärmetauscher 4 gepumpt werden kann. Die Wärmeträgerflüssigkeit durchströmt die Rohrabschnitte 29 und gelangt über einen Auslauf zurück in das Leitungssystem 16 und schließlich zurück zu der Wärmepumpe 15. Besitzt die über den Zulauf 5 einströmende Wärmeträgerflüssigkeit eine Temperatur, die geringer ist als die Temperatur des die Rohrabschnitte 29 umgebenden Wassers 25, so wird Wärmeenergie vom Wasser 25 auf die Wärmeträgerflüssigkeit übertragen, die schließlich über die Wärmepumpe 15 zum Erwärmen des Bauwerks 17 genutzt werden kann. Gleichzeitig kühlt sich das Wasser 25 im Gewässer 2 ab, wobei dies je nach Ausgangstemperatur des Gewässers 2 und der Temperatur der Wärmeträgerflüssigkeit sogar zu einem Gefrieren des die Rohrabschnitte umgebenden Wassers 25 führen kann.

Wie schließlich den Figuren 1 und 2 darüber hinaus entnommen werden kann, kann die Vorrichtung 1 einen zweiten Wasserwärmetauscher 4 umfassen, der ebenfalls von einer Wärmeträgerflüssigkeit durchströmt werden kann und der sich beispielsweise durch nach oben ragende Rippen 23 des Deckenabschnitts 26 erstreckt (von den Rippen 23 können selbstverständlich mehrere vorhanden sein).

Dieser zweite Wasserwärmetauscher 4 befindet sich somit in einem Bereich, in dem er dem Wasser 25 des Gewässers 2 Wärmeenergie entziehen kann, das sich oberhalb des Deckenabschnitts 26 befindet. Der Deckenabschnitt 26 bildet in diesem Fall mit den aus dem Wasser ragenden Abschnitten 27 der Vorrichtung 1 eine Art Becken 14, das zumindest teilweise ein Wasservolumen begrenzt.

Wird diesem Wasser 25 Wärmeenergie über den zweiten Wasserwärmetauscher 4 entzogen, so kommt es in Abhängigkeit der jeweiligen Bedingungen zu einem raschen Gefrieren dieses Wasservolumens, so dass bedingt durch den Phasenübergang besonders viel Wärmeenergie pro Volumen Wasser 25 entzogen werden kann.

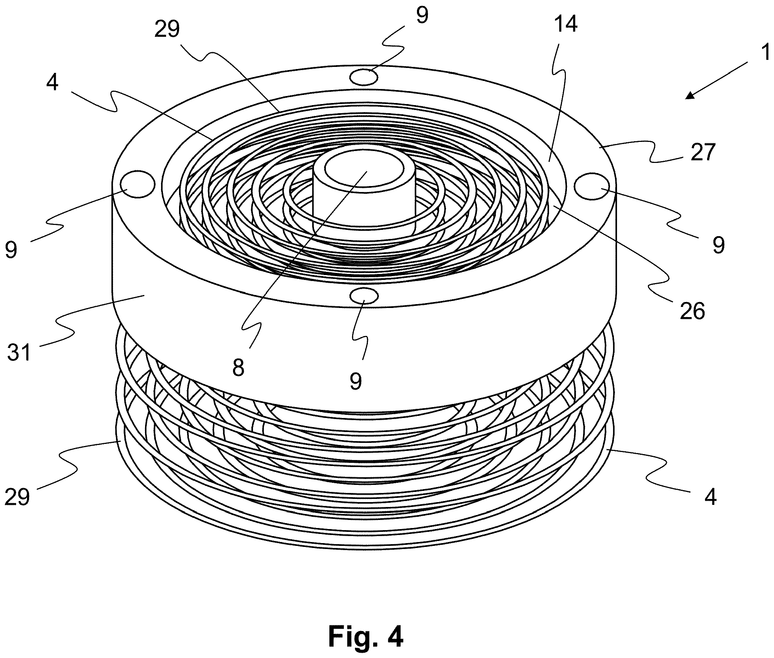

Eine zweite mögliche Ausführungsform ist in den Figuren 4 (Perspektive) und 5 (Schnitt durch den linken und rechten Luftauslass 9 in Figur 4) gezeigt.

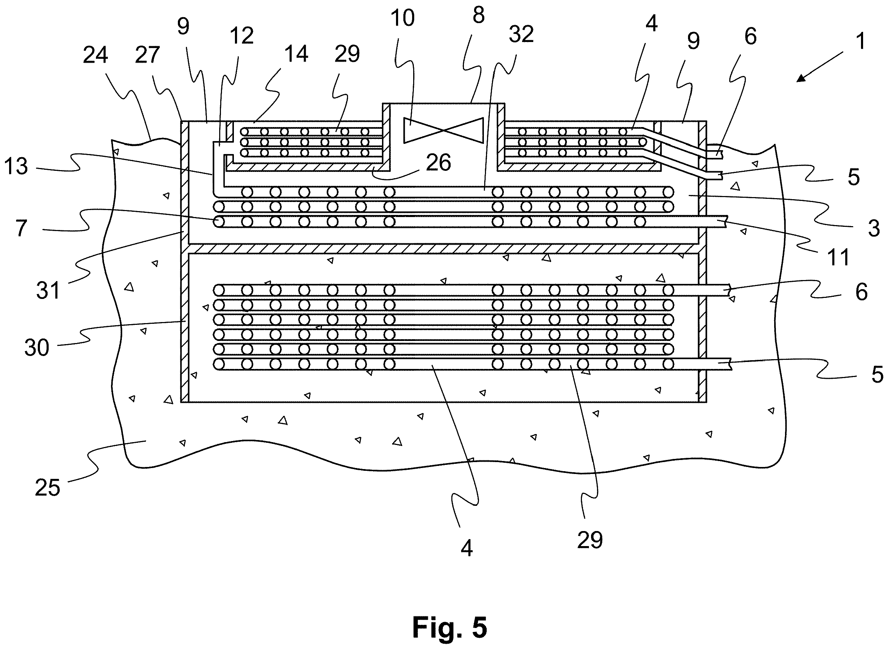

Im Gegensatz zu der in den vorherigen Figuren gezeigten Ausführung ist der Grundkörper 31 der in den Figuren 4 und 5 gezeigten Vorrichtung 1 in einer Draufsicht rund ausgebildet. Die Rohrabschnitte 29 des nach unten in das Gewässer 2 ragenden Wasserwärmetauschers 4, die Rohrabschnitte 29 des in das obere Becken 14 ragenden Wasserwärmetauschers 4 und die Wärmetauscherrohre 32 des Luftwärmetauschers 7 sind in diesem Fall spiralförmig ausgebildet und winden sich um eine gedachte Mittelachse, die durch den Mittelpunkt des kreisförmigen Lufteinlasses 8 verläuft.

Ferner zeigt Figur 5, dass die nach unten in das Gewässer 2 ragenden Rohrabschnitte 29 des Wasserwärmetauschers 4 zur Seite hin von einer schürzenartigen Schutzwandung 30 umgeben sein können, die aus Übersichtsgründen in Figur 4 nicht dargestellt ist.

Figur 5 zeigt ebenso, dass der Auslass 12 des Luftwärmetauschers 7 vorzugsweise in das Becken 14 mündet, so dass das über den Auslass 12 ausströmende Wasser 25 über das Becken 14 zurück in das Gewässer 2 läuft und hierbei mit Hilfe einfallender Sonnenstrahlung weiter erwärmt wird.

Der im Becken 14 angeordnete zweite Wasserwärmetauscher 4 kann im Übrigen, wie gezeigt, über einen separaten Zulauf 5 und einen separaten Ablauf 6 für eine Wärmeträgerflüssigkeit verfügen. Prinzipiell können der genannte Wasserwärmetauscher 4 und der nach unten in das Gewässer 2 ragende Wasserwärmetauscher 4 selbstverständlich auch gekoppelt sein, so dass die Wärmeträgerflüssigkeit beide Wasserwärmetauscher 4 nach Art einer Reihen- oder auch Parallelschaltung durchströmen kann.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

### Bezugszeichenliste

- 1: Vorrichtung zum Einbringen von Wärme in ein Gewässer sowie zum Entziehen von Wärme aus dem Gewässer
- 2: Gewässer
- 3: Hohlraum
- 4: Wasserwärmetauscher
- 5: Zulauf des Wasserwärmetauschers
- 6: Ablauf des Wasserwärmetauschers
- 7: Luftwärmetauscher
- 8: Lufteinlass des Luftwärmetauschers
- 9: Luftauslass des Luftwärmetauschers
- 10: Lüfter
- 11: Einlass des Luftwärmetauschers für aus dem Gewässer stammendes Wasser
- 12: Auslass des Luftwärmetauschers für aus dem Gewässer stammendes Wasser
- 13: Trennwand
- 14: Becken
- 15: Wärmepumpe
- 16: Leitungssystem
- 17: Bauwerk
- 18: Heizkreislauf des Bauwerks
- 19: Kühlkreislauf des Bauwerks
- 20: Zuleitung
- 21: Ableitung
- 22: Festland
- 23: Rippe
- 24: Wasserspiegel
- 25: Wasser
- 26: Deckenabschnitt
- 27: aus dem Gewässer ragender Abschnitt
- 28: Leitung
- 29: Rohrabschnitt
- 30: Schutzwandung
- 31: Grundkörper
- 32: Wärmetauscherrohr

## Patentansprüche

1. Vorrichtung (1) zum Einbringen von Wärmeenergie in ein Gewässer (2) sowie zum Entziehen von Wärmeenergie aus dem Gewässer (2),
- wobei die Vorrichtung (1) einen Hohlraum (3) aufweist, so dass sie nach Einsetzen in das Gewässer (2) schwimmt,
- wobei die Vorrichtung (1) einen Wasserwärmetauscher (4) aufweist, der nach dem Einsetzen der Vorrichtung (1) in das Gewässer (2) zumindest teilweise in das Gewässer (2) eintaucht,
- wobei der Wasserwärmetauscher (4) einen Zulauf (5) für eine Wärmeträgerflüssigkeit und einen Ablauf (6) für die Wärmeträgerflüssigkeit aufweist, so dass die Wärmeträgerflüssigkeit durch den Wasserwärmetauscher (4) strömen und hierbei Wärmeenergie an das Gewässer (2) abgeben oder dem Gewässer (2) Wärmeenergie entziehen kann,
**dadurch gekennzeichnet,**
**dass** die Vorrichtung (1) darüber hinaus einen Luftwärmetauscher (7) aufweist,
- wobei der Luftwärmetauscher (7) einen Lufteinlass (8) für den Eintritt von Umgebungsluft und einen Luftauslass (9) für den Austritt der zuvor über den Lufteinlass (8) in den Luftwärmetauscher (7) eingetretenen Umgebungsluft aufweist,
- wobei die Vorrichtung (1) zumindest einen Lüfter (10) umfasst, mit dessen Hilfe Umgebungsluft über den Lufteinlass (8) in den Luftwärmetauscher (7) und anschließend durch den Luftwärmetauscher (7) bewegbar ist,
- wobei der Luftwärmetauscher (7) ferner einen Einlass (11) für aus dem Gewässer (2) stammendes Wasser (25) und einen Auslass (12) für das über den Einlass (11) zugeführte Wasser (25) aufweist, so dass Wasser (25) aus dem Gewässer (2) durch den Luftwärmetauscher (7) strömen und diesen anschließend wieder verlassen kann, und
- wobei der Luftwärmetauscher (7) wenigstens eine Trennwand (13) umfasst, mit deren Hilfe das den Luftwärmetauscher (7) durchströmende Wasser (25) von der den Luftwärmetauscher (7) durchströmenden Umgebungsluft getrennt ist und über die Wärmeenergie zwischen der den Luftwärmetauscher (7) durchströmenden Umgebungsluft und dem den Luftwärmetauscher (7) durchströmenden Wasser (25) übertragbar ist.

2. Vorrichtung (1) gemäß dem vorangegangenen Anspruch, **dadurch gekennzeichnet, dass** die Vorrichtung (1) einen den Hohlraum (3) bildenden Grundkörper (31) aufweist, der vorzugsweise und wenigstens großteils aus Beton besteht.

3. Vorrichtung (1) gemäß einem der vorangegangenen Ansprüche,
**dadurch gekennzeichnet, dass** der Wasserwärmetauscher (4) beim bestimmungsgemäßen Gebrauch der Vorrichtung (1) unterhalb des Grundkörpers (31) der Vorrichtung (1) in das Gewässer (2) eintaucht.

4. Vorrichtung (1) gemäß einem der vorangegangenen Ansprüche,
**dadurch gekennzeichnet, dass** der Wasserwärmetauscher (4) ein oder mehrere von der Wärmeträgerflüssigkeit durchströmbare Rohrabschnitte (29) umfasst, die beim bestimmungsgemäßen Gebrauch der Vorrichtung (1) zumindest abschnittsweise in das Gewässer (2) eintauchen.

5. Vorrichtung (1) gemäß einem der vorangegangenen Ansprüche,
**dadurch gekennzeichnet, dass** die Vorrichtung (1) eine in das Gewässer (2) eingetauchte Schutzwandung (30) umfasst, die das oder die in das Gewässer (2) eintauchenden Wärmetauscherelement(e) seitlich abschirmen.

6. Vorrichtung (1) gemäß einem der vorangegangenen Ansprüche,
**dadurch gekennzeichnet, dass** die Vorrichtung (1) Abschnitte (27) aufweist, die beim bestimmungsgemäßen Gebrauch der Vorrichtung (1) aus dem Gewässer (2) ragen, wobei der Lüfter (10) vorzugsweise im Bereich einer dieser Abschnitte (27) angeordnet ist.

7. Vorrichtung (1) gemäß einem der vorangegangenen Ansprüche,
**dadurch gekennzeichnet, dass** der Lüfter (10) im Bereich des Lufteinlasses (8) oder des Luftauslasses (9) angeordnet ist.

8. Vorrichtung (1) gemäß einem der vorangegangenen Ansprüche,
**dadurch gekennzeichnet, dass** die Vorrichtung (1) Abschnitte (27) aufweist, die beim bestimmungsgemäßen Gebrauch der Vorrichtung (1) aus dem Gewässer (2) ragen und einen Oberflächenabschnitt des Gewässers (2) zumindest abschnittsweise seitlich begrenzen.

9. Vorrichtung (1) gemäß dem vorangegangenen Anspruch, **dadurch gekennzeichnet, dass** sich zwischen den genannten Abschnitten (27) ein beim bestimmungsgemäßen Gebrauch der Vorrichtung (1) unterhalb der Wasseroberfläche des Gewässers (2) liegender und von oben zumindest teilweise sichtbarer Deckenabschnitt (26) der Vorrichtung (1) erstreckt.

10. Vorrichtung (1) gemäß dem vorangegangenen Anspruch, **dadurch gekennzeichnet, dass** sich der Auslass (12) des Luftwärmetauschers (7) im Bereich des Deckenabschnitts (26) erstreckt, so dass über den Auslass (12) aus dem Luftwärmetauscher (7) austretendes Wasser (25) über den Deckenabschnitt (26) zurück in das Gewässer (2) strömen kann.

11. Vorrichtung (1) gemäß Anspruch 9 oder 10, **dadurch gekennzeichnet, dass** der Deckenabschnitt (26) gemeinsam mit den aus dem Gewässer (2) ragenden Abschnitten (27) ein nach unten und zumindest abschnittsweise auch zur Seite hin begrenztes Becken (14) bildet.

12. Vorrichtung (1) gemäß dem vorangegangenen Anspruch, **dadurch gekennzeichnet, dass** sich der genannte Wasserwärmetauscher (4) und/oder ein zweiter Wasserwärmetauscher (4) der Vorrichtung (1), der ebenfalls einen Zulauf (5) für eine Wärmeträgerflüssigkeit und einen Ablauf (6) für die Wärmeträgerflüssigkeit aufweist, in den Deckenabschnitt (26) und/oder das Becken (14) erstreckt, so dass Wärmeenergie zwischen der Wärmeträgerflüssigkeit und dem sich in dem Becken (14) befindlichen Wasser (25) übertragbar ist

13. Anlage zum Einbringen von Wärmeenergie in ein Gewässer (2) sowie zum Entziehen von Wärmeenergie aus dem Gewässer (2),
**dadurch gekennzeichnet,**
**dass** die Anlage eine in einem Gewässer (2) schwimmende Vorrichtung (1) gemäß einem der vorangegangenen Ansprüche umfasst, dass die Anlage eine außerhalb des Gewässers (2) angeordnete Wärmepumpe (15) umfasst, und dass die Anlage ein Leitungssystem (16) umfasst, mit dessen Hilfe die Wärmepumpe (15) mit der Vorrichtung (1) verbunden ist.

14. Anlage gemäß dem vorangegangenen Anspruch, **dadurch gekennzeichnet, dass** die Anlage mehrere Vorrichtungen (1) gemäß einem der Ansprüche 1 bis 12 umfasst, wobei die Vorrichtungen (1), insbesondere auch deren Luftwärmetauscher (7) und/oder deren Wasserwärmetauscher (4), miteinander verbunden sind und damit eine Einheit bilden.

15. Verfahren zum Erwärmen eines Bauwerks (17) mit Hilfe einer Vorrichtung (1) gemäß einem der Ansprüche 1 bis 12, umfassend folgende Schritte:
- Einbringen der Vorrichtung (1) in ein Gewässer (2),
- Verbinden der Vorrichtung (1) mit einer sich an Land befindlichen Wärmepumpe (15),
- wenigstens zeitweises Betreiben des Lüfters (10), um Umgebungsluft durch den Luftwärmetauscher (7) zu bewegen,
- wenigstens zeitweises Bewegen von aus dem Gewässer (2) stammendem Wasser (25) durch den Luftwärmetauscher (7), wobei Wärmeenergie von der den Luftwärmetauscher (7) durchströmenden Umgebungsluft auf das durch den Luftwärmetauscher (7) strömende Wasser (25) übertragen wird und dieses erwärmt, so dass die aus der Umgebungsluft stammende Wärmeenergie in dem Gewässer (2) zwischengespeichert wird, und
- wenigstens zeitweises Bewegen einer Wärmeträgerflüssigkeit von der Wärmepumpe (15) durch den Wasserwärmetauscher (4) und zurück zur Wärmepumpe (15), wobei im Bereich der Vorrichtung (1) Wärmeenergie von dem aus dem Gewässer (2) stammenden Wasser (25) auf die Wärmeträgerflüssigkeit und anschließend mit Hilfe der Wärmepumpe (15) von der Wärmeträgerflüssigkeit auf einen Heizkreislauf (18) des Bauwerks (17) übertragen wird, um dieses zu erwärmen.

16. Verfahren gemäß dem vorangegangenen Anspruch, **dadurch gekennzeichnet, dass** der Betrieb des Lüfters (10), das Bewegen von aus dem Gewässer (2) stammendem Wasser (25) durch den Luftwärmetauscher (7) und/oder das Bewegen der Wärmeträgerflüssigkeit durch den Wasserwärmetauscher (4) in Abhängigkeit des Wärmebedarfs des Bauwerks (17) und/oder der Temperatur der Umgebungsluft und/oder der Temperatur des Gewässers (2) erfolgt.

17. Verfahren zum Kühlen eines Bauwerks (17) mit Hilfe einer Vorrichtung (1) gemäß einem der Ansprüche 1 bis 12, umfassend folgende Schritte:
- Einbringen der Vorrichtung (1) in ein Gewässer (2),
- Verbinden der Vorrichtung (1) mit einem sich an Land befindlichen Kühlkreislaufs (19) des Bauwerks (17),
- wenigstens zeitweises Betreiben des Lüfters (10), um Umgebungsluft durch den Luftwärmetauscher (7) zu bewegen,
- wenigstens zeitweises Bewegen von aus dem Gewässer (2) stammendem Wasser (25) durch den Luftwärmetauscher (7), wobei Wärmeenergie von dem den Luftwärmetauscher (7) durchströmenden Wasser (25) auf die durch den Luftwärmetauscher (7) strömende Umgebungsluft übertragen wird, so dass sich das Wasser (25) abkühlt, und
- wenigstens zeitweises Bewegen einer Wärmeträgerflüssigkeit vom Kühlkreislauf (19) durch den Wasserwärmetauscher (4), wobei im Bereich der Vorrichtung (1) Wärmeenergie von der den Wasserwärmetauscher (4) durchströmenden Wärmeträgerflüssigkeit auf das aus dem Gewässer (2) stammende Wasser (25) übertragen wird, so dass sich die Wärmeträgerflüssigkeit im Bereich der Vorrichtung (1) abkühlt,
- Rückführen der abgekühlten Wärmeträgerflüssigkeit zum Kühlkreislauf (19) des Bauwerks (17), um dieses zu kühlen.

18. Verfahren gemäß dem vorangegangenen Anspruch, **dadurch gekennzeichnet, dass** der Betrieb des Lüfters (10), das Bewegen von aus dem Gewässer (2) stammendem Wasser (25) durch den Luftwärmetauscher (7) und/oder das Bewegen der Wärmeträgerflüssigkeit durch den Wasserwärmetauscher (4) in Abhängigkeit des Kältebedarfs des Bauwerks (17) und/oder der Temperatur der Umgebungsluft und/oder der Temperatur des Gewässers (2) erfolgt.

## Claims

1. A device (1) for introducing heat energy into a body of water (2) and for extracting heat energy from the body of water (2),
- the device (1) comprising a hollow space (3) so that said device floats when placed in the body of water (2),
- the device (1) comprising a water heat exchanger (4) at least partially immersing in the body of water (2) after the device (1) is placed in the body of water (2),
- the water heat exchanger (4) comprising an intake (5) for a heat transfer fluid and a discharge (6) for the heat transfer fluid, so that the heat transfer fluid can flow through the water heat exchanger (4) and in doing so give off heat energy to the body of water (2) or extract heat energy from the body of water (2),
**characterized in that**
the device (1) further comprises an air heat exchanger (7),
- wherein the air heat exchanger (7) comprises an air inlet (8) for taking in ambient air and an air outlet (9) for discharging the ambient air previously having entered the air heat exchanger (7) through the air inlet (8),
- wherein the device (1) comprises at least one fan (10) by means of which ambient air can be displaced through the air inlet (8) into the air heat exchanger (7) and then through the air heat exchanger (7),
- wherein the air heat exchanger (7) further comprises an inlet (11) for the water (25) originating from the body of water (2) and an outlet (12) for the water (25) fed in through the inlet (11), so that water (25) from the body of water (2) can flow through the air heat exchanger (7) and then exit the same, and
- wherein the air heat exchanger (7) comprises at least one partition (13) by means of which the water (25) flowing through the air heat exchanger (7) is separated from the ambient air flowing through the air heat exchanger (7) and through which heat energy can be transferred between the ambient air flowing through the air heat exchanger (7) and the water (25) flowing through the air heat exchanger (7).

2. The device (1) according to the preceding claim, **characterized in that** the device (1) comprises a base body (31) forming the hollow space (3) and preferably and at least mostly made of concrete.

3. The device (1) according to any one of the preceding claims, **characterized in that** the water heat exchanger (4) immerses in the body of water (2) below the base body (31) of the device (1) when the device (1) is used as intended.

4. The device (1) according to any one of the preceding claims, **characterized in that** the water heat exchanger (4) comprises one or more tube segments (29) through which the heat transfer fluid can flow, said segments (29) immersing in the body of water (2) at least in segments when the device (1) is used as intended.

5. The device (1) according to any one of the preceding claims, **characterized in that** the device (1) comprises a protective wall (30) immersed in the body of water (2) and laterally protecting the heat exchanger element(s) immersing in the body of water (2).

6. The device (1) according to any one of the preceding claims, **characterized in that** the device (1) comprises segments (27) protruding out of the body of water (2) when the device (1) is used as intended, wherein the fan (10) is preferably disposed in the region of one of said segments (27).

7. The device (1) according to any one of the preceding claims, **characterized in that** the fan (10) is disposed in the region of the air inlet (8) or of the air outlet (9).

8. The device (1) according to any one of the preceding claims, **characterized in that** the device (1) comprises segments (27) protruding out of the body of water (2) when the device (1) is used as intended and laterally bounding a surface section of the body of water (2) at least in segments.

9. The device (1) according to the preceding claim, **characterized in that** a cover segment (26) of the device (1) extends between said segments (27) and is below the water surface of the body of water (2) when the device (1) is used as intended and is at least partially visible from above.

10. The device (1) according to the preceding claim, **characterized in that** the outlet (12) of the air heat exchanger (7) extends in the region of the cover segment (26) such that water (25) exiting the air heat exchanger (7) through the outlet (12) can flow across the cover segment (26) back into the body of water (2).

11. The device (1) according to claim 9 or 10, **characterized in that** the cover segment (26) together with the segments (27) protruding out of the body of water (2) forms a basin (14) bounded at the bottom and at least in segments at the sides.

12. The device (1) according to the preceding claim, **characterized in that** said water heat exchanger (4) and/or a second water heat exchanger (4) of the device (1), also comprising an intake (5) for a heat transfer fluid and a discharge (6) for the heat transfer fluid, extends into the cover segment (26) and/or the basin (14), so that heat energy can be transferred between the heat transfer fluid and the water (25) present in the basin (14).

13. A system for introducing heat energy into a body of water (2) and for extracting heat energy from the body of water (2),
**characterized in that**
the system comprises a device (1) according to any one of the preceding claims floating in a body of water (2), and that the system comprises a heat pump (15) disposed outside of the body of water (2), and that the system comprises a pipe system (16) by means of which the heat pump (15) is connected to the device (1).

14. The system according to the preceding claim, **characterized in that** the system comprises a plurality of devices (1) according to any one of the claims 1 through 12, wherein the devices (1), particularly also the air heat exchangers (7) thereof and/or the water heat exchangers (4) thereof, are connected to each other and thereby form a unit.

15. A method for heating a building (17) by means of a device (1) according to any one of the claims 1 through 12, comprising the following steps:
- introducing the device (1) into a body of water (2),
- connecting the device (1) to a heat pump (15) present on land,
- operating the fan (10) at least intermittently for displacing ambient air through the air heat exchanger (7),
- displacing water (25) originating from the body of water (2) through the air heat exchanger (7) at least intermittently, wherein heat energy is transferred from the ambient air flowing through the air heat exchanger (7) into the water (25) flowing through the air heat exchanger (7) and heats up said water (25), so that the heat energy originating from the ambient air is intermediately stored in the body of water (2), and
- displacing a heat transfer fluid at least intermittently from the heat pump (15) through the water heat exchanger (4) and back to the heat pump (15), wherein heat energy from the water (25) originating from the body of water (2) is transferred to the heat transfer fluid in the region of the device (1) and then transferred by means of the heat pump (15) from the heat transfer fluid to a heating circuit (18) of the building (17) in order to heat up the same.

16. The method according to the preceding claim, **characterized in that** operating the fan (10), displacing the water (25) originating from the body of water (2) through the air heat exchanger (7), and/or displacing the heat transfer fluid through the water heat exchanger (4) occur as a function of the heating demand of the building (17) and/or of the temperature of the ambient air and/or of the temperature of the body of water (2).

17. A method for cooling a building (17) by means of a device (1) according to any one of the claims 1 through 12, comprising the following steps:
- introducing the device (1) into a body of water (2),
- connecting the device (1) to a cooling circuit (19) of the building (17) present on land,
- operating the fan (10) at least intermittently for displacing ambient air through the air heat exchanger (7),
- displacing water (25) originating from the body of water (2) through the air heat exchanger (7) at least intermittently, wherein heat energy is transferred from the water (25) flowing through the air heat exchanger (7) into the ambient air flowing through the air heat exchanger (7), so that the water (25) cools off, and
- displacing a heat transfer fluid at least intermittently from the cooling circuit (19) through the water heat exchanger (4), wherein heat energy is transferred from the heat transfer fluid flowing through the water heat exchanger (4) into the water (25) originating from the body of water (2) in the region of the device (1), so that the heat transfer fluid cools off in the region of the device (1),
- returning the cooled heat transfer fluid to the cooling circuit (19) of the building (17) for cooling the same.

18. The method according to the preceding claim, **characterized in that** operating the fan (10), displacing water (25) originating from the body of water (2) through the air heat exchanger (7), and/or displacing the heat transfer fluid through the water heat exchanger (4) occur as a function of the cooling demand of the building (17) and/or of the temperature of the ambient air and/or of the temperature of the body of water (2).

## Revendications

1. Dispositif (1) pour introduire de l'énergie thermique dans un plan d'eau (2) ainsi que pour extraire de l'énergie thermique depuis le plan d'eau (2),
- dans lequel le dispositif (1) présente un espace creux (3) de sorte qu'il flotte après la mise en place dans le plan d'eau (2),
- dans lequel le dispositif (1) comporte un échangeur de chaleur à eau (4) qui immerge au moins partiellement dans le plan d'eau (2) après la mise en place du dispositif (1) dans le plan d'eau (2),
- dans lequel l'échangeur de chaleur à eau (4) comporte un orifice d'admission (5) pour un liquide caloporteur et un orifice d'écoulement (6) pour le liquide caloporteur, de sorte que le liquide caloporteur puisse circuler à travers l'échangeur de chaleur à eau (4) et, ce faisant, délivrer de l'énergie thermique au plan d'eau (2) ou extraire de l'énergie thermique depuis le plan d'eau (2), **caractérisé en ce que**,
le dispositif (1) comporte en outre un échangeur de chaleur à air (7),
- dans lequel l'échangeur de chaleur à air (7) comporte une entrée d'air (8) pour l'entrée de l'air ambiant et un sortie d'air (9) pour la sortie de l'air ambiant entré auparavant dans l'échangeur de chaleur à air (7) via l'entrée d'air (8),
- dans lequel le dispositif (1) comporte au moins un ventilateur (10) à l'aide duquel l'air ambiant peut être refoulé via l'entrée d'air (8) dans l'échangeur de chaleur à air (7) et, ensuite, à travers l'échangeur de chaleur à air (7),
- dans lequel l'échangeur de chaleur à air (7) comporte en outre une entrée (11) pour l'eau (25) provenant du plan d'eau (2) et une sortie (12) pour l'eau (25) introduite via l'entrée (11), de sorte l'eau (25) provenant du plan d'eau (2) puisse circuler à travers l'échangeur de chaleur à air (7) et quitter ce dernier à nouveau, et
- dans lequel l'échangeur de chaleur à air (7) comporte au moins une plaque de partition (13) à l'aide de laquelle l'eau (25) parcourant l'échangeur de chaleur à air (7) est séparée de l'air ambiant parcourant l'échangeur de chaleur à air (7) et via laquelle l'énergie thermique peut être transmise entre l'air ambiant parcourant l'échangeur de chaleur à air (7) et l'eau (25) parcourant l'échangeur de chaleur à air (7).

2. Dispositif (1) selon la revendication précédente, **caractérisé en ce que** le dispositif (1) présente un corps de base (31) formant l'espace creux (3), qui est réalisé de préférence et au moins en grande partie en béton.

3. Dispositif (1) selon l'une des revendications précédentes, **caractérisé en ce que** l'échangeur de chaleur à eau (4) immerge dans le plan d'eau (2) en-deçà du corps de base (31) du dispositif (1) dans l'utilisation du dispositif (1) conforme à sa destination.

4. Dispositif (1) selon l'une des revendications précédentes, **caractérisé en ce que** l'échangeur de chaleur à eau (4) comprend un ou plusieurs segments (29) de tube pouvant être parcourus par le liquide caloporteur, qui immergent dans le plan d'eau (2) au moins en certaines sections dans l'utilisation du dispositif (1) conforme à sa destination.

5. Dispositif (1) selon l'une des revendications précédentes, **caractérisé en ce que** le dispositif (1) comporte une paroi de protection (30) immergée dans le plan d'eau (2), qui protège latéralement le ou les élément(s) d'échange de chaleur immergeant dans le plan d'eau (2).

6. Dispositif (1) selon l'une des revendications précédentes, **caractérisé en ce que** le dispositif (1) comporte des sections (27) qui, dans l'utilisation du dispositif (1) conforme à sa destination, débordent du plan d'eau (2), sachant que le ventilateur (10) est de préférence disposé dans la zone de l'une de ces sections (27).

7. Dispositif (1) selon l'une des revendications précédentes, **caractérisé en ce que** le ventilateur (10) est disposé dans la zone de l'entrée d'air (8) ou de la sortie d'air (9).

8. Dispositif (1) selon l'une des revendications précédentes, **caractérisé en ce que** le dispositif (1) comporte des sections (27) qui, dans l'utilisation du dispositif (1) conforme à sa destination, débordent du plan d'eau (2) et limitent latéralement, au moins par sections, une section de surface du plan d'eau (2).

9. Dispositif (1) selon la revendication précédente, caractérisé en ce qu'une section de couvercle (26) du dispositif (1) flottant en-deçà de la surface d'eau du plan d'eau (2) et visible au moins partiellement depuis le haut s'étend entre lesdites sections (27) dans l'utilisation du dispositif (1) conforme à sa destination.

10. Dispositif (1) selon la revendication précédente, **caractérisé en ce que** la sortie (12) de l'échangeur de chaleur à air (7) s'étend dans la zone de la section de plafond (26), de sorte que l'eau (25) sortant de l'échangeur de chaleur à air (7) via la sortie (12) puisse refluer dans le plan d'eau (2) via la section de plafond (26).

11. Dispositif (1) selon la revendication 9 ou 10, **caractérisé en ce que** la section de plafond (26) forme conjointement avec les sections (27) débordant du plan d'eau (2) un bassin (14) limité vers le bas et, au moins en certaines sections, vers les côtés.

12. Dispositif (1) selon la revendication précédente, **caractérisé en ce que** ledit échangeur de chaleur à eau (4) et/ou un second échangeur de chaleur à eau (4) du dispositif(1), qui comporte également un orifice d'admission (5) pour un liquide caloporteur et un orifice d'écoulement (6) pour le liquide caloporteur, s'étend dans la section de plafond (26) et/ou le bassin (14), de sorte que l'énergie thermique soit transmissible entre le liquide caloporteur et l'eau (25) contenue dans le bassin (14).

13. Installation pour introduire de l'énergie thermique dans un plan d'eau (2) ainsi que pour extraire de l'énergie thermique depuis le plan d'eau (2), **caractérisée en ce que** l'installation comprend un dispositif (1) selon l'une des revendications précédentes flottant dans un plan d'eau (2), que l'installation comporte une pompe à chaleur (15) disposé hors du plan d'eau (2) et que l'installation comporte un système de tuyauterie (16) à l'aide duquel la pompe à chaleur (15) est reliée avec le dispositif (1).

14. Installation selon la revendication précédente, **caractérisée en ce que** l'installation comprend plusieurs dispositifs (1) selon l'une des revendications 1 à 12, sachant que les dispositifs (1), en particulier leur échangeur de chaleur à air (7) et/ou leur échangeur de chaleur à eau (4), sont reliés les uns avec les autres et forment ainsi une unité.

15. Procédé pour chauffer un ouvrage (17) à l'aide d'un dispositif (1) selon l'une des revendications 1 à 12, comprenant les étapes suivantes :
- mettre en place le dispositif (1) dans un plan d'eau (2),
- relier le dispositif (1) avec une pompe à chaleur (15) disposée à terre,
- faire marcher le ventilateur (10) au moins temporairement afin de refouler de l'air ambiant à travers l'échangeur de chaleur à air (7),
- refouler au moins temporairement de l'eau (25) provenant du plan d'eau (2) à travers l'échangeur de chaleur à air (7), sachant que l'énergie thermique provenant de l'air ambiant parcourant l'échangeur de chaleur à air (7) est transmise à l'eau (25) parcourant l'échangeur de chaleur à air (7) et réchauffe cette dernière, de sorte que l'énergie thermique provenant de l'air ambiant soit accumulée temporairement dans le plan d'eau (2), et
- refouler au moins temporairement un liquide caloporteur de la pompe à chaleur (15) à travers l'échangeur de chaleur à eau (4) et en retour vers la pompe à chaleur (15), sachant que dans la zone du dispositif (1), l'énergie thermique est transmise depuis l'eau (25) provenant du plan d'eau (2) au liquide caloporteur et, ensuite, à l'aide de la pompe à chaleur (15), du liquide caloporteur dans un circuit de chauffage (18) de l'ouvrage (17) afin de chauffer ce dernier.

16. Procédé selon la revendication précédente, **caractérisé en ce que** l'exploitation du ventilateur (10), le refoulement de l'eau (25) provenant du plan d'eau (2) à travers l'échangeur de chaleur à air (7) et/ou le refoulement du liquide caloporteur à travers l'échangeur de chaleur à eau (4) s'effectue en fonction du besoin de chaleur de l'ouvrage (17) et/ou de la température de l'air ambiant et/ou de la température du plan d'eau (2).

17. Procédé pour refroidir un ouvrage (17) à l'aide d'un dispositif (1) selon l'une des revendications 1 à 12, comprenant les étapes suivantes :
- mettre en place le dispositif (1) dans un plan d'eau (2),
- relier le dispositif (1) avec un circuit de refroidissement (19) disposé à terre de l'ouvrage (17),
- faire marcher le ventilateur (10) au moins temporairement afin de refouler de l'air ambiant à travers l'échangeur de chaleur à air (7),
- refouler au moins temporairement de l'eau (25) provenant du plan d'eau (2) à travers l'échangeur de chaleur à air (7), sachant que l'énergie thermique provenant de l'eau (25) parcourant l'échangeur de chaleur à air (7) est transmise à l'air ambiant parcourant l'échangeur de chaleur à air (7) de sorte que l'eau (25) se refroidisse, et
- refouler au moins temporairement un liquide caloporteur depuis le circuit de refroidissement (19) à travers l'échangeur de chaleur à eau (4), sachant que dans la zone du dispositif (1), l'énergie thermique est transmise depuis le liquide caloporteur parcourant l'échangeur de chaleur à eau (4) à l'eau (25) provenant du plan d'eau (2), de sorte que le liquide caloporteur se refroidisse dans la zone du dispositif (1),
- refouler en retour le liquide caloporteur refroidi vers le circuit de refroidissement (19) de l'ouvrage (17) afin de refroidir ce dernier.

18. Procédé selon la revendication précédente, **caractérisé en ce que** l'exploitation du ventilateur (10), le refoulement de l'eau (25) provenant du plan d'eau (2) à travers l'échangeur de chaleur à air (7) et/ou le refoulement du liquide caloporteur à travers l'échangeur de chaleur à eau (4) s'effectue en fonction du besoin de froid de l'ouvrage (17) et/ou de la température de l'air ambiant et/ou de la température du plan d'eau (2).
